# EUROPEAN PATENT APPLICATION

(11) **EP 1 118 487 A1**
(43) Date of publication of application: **25.07.2001**
(21) Application number: 01200148.3
(22) Date of filing: 16.01.2001
(51) Int. Cl.: B60J 7/057

(54) **Open roof construction for a vehicle**

(30) Priority: 20.01.2000 NL 1014129
(71) Applicant: Inalfa Industries B.V., 5804 AB Venray (NL)
(72) Inventor: Nabuurs, Martinus Wilhelmus Maria, 5825 JT Overloon (NL)
(74) Representative: Voncken, Bartholomeus Maria Christiaan

(57) **Abstract**

An open roof construction for a vehicle, comprising a roof opening that can be closed by a movable closure element, which closure element includes driving means that can be actuated by a control unit. The control unit thereby includes sensors for receiving signals relating to vibrations of the vehicle and actuating the driving means of the closure element on the basis of said signals. The signals relating to vibrations may be based on the measurement of an acceleration value, a vibration frequency or a vibration amplitude. Trucks form an important field of application for this open roof construction.

## Description

The invention relates to an open roof construction for a vehicle, comprising a roof opening that can be closed by a movable closure element, which closure element includes driving means that can be actuated by a control unit.

When a closure element of such an open roof construction occupies a position other than the completely closed position, situations may arise under certain circumstances wherein the closure element is subjected to heavy loads. When the vehicle is driven across rough terrain, for example, vibrations may be produced which lead to resonances in the closure element, as a result of which specific parts may be damaged or even break down.

Other factors that contribute to this effect are the condition of the suspension of the vehicle in question in which the open roof construction is mounted, the driving speed of the vehicle, the specific position of the closure element, the interaction between the closure element and the air flowing past said closure element, etc.

The above-mentioned phenomenon may be the result of a combination of factors that is so complicated that it is hardly predictable in advance, if at all, under which circumstances situations may arise that are harmful or even dangerous for the closure element.

Accordingly, it is an object of the invention to provide a solution for this problem.

In order to accomplish that objective the open roof construction according to the invention is characterized in that the control unit includes sensors for receiving signals relating to vibrations of the vehicle and actuating the driving means of the closure element on the basis of said signals.

When the sensors detect signals relating to vibrations of the vehicle that are known to lead to the aforesaid undesirable vibrations/resonances of the closure element, the control unit will actuate the driving means of said closure element in such a manner that the closure element is moved to a position in which said vibrations/resonances do not occur, or at least to a lesser extent. Thus a fully automatic response to varying external conditions is provided, so that the closure element will occupy a safe position at all times.

In a preferred embodiment of the open roof construction according to the invention the control unit includes a memory unit for storing vibration conditions, and a comparator unit for comparing the received signals with the stored vibration conditions and actuating the driving means on the basis of the result of the comparison.

This embodiment makes it possible to store predetermined vibration conditions that are known to be capable of leading to hazardous situations in the memory of the control unit. When the comparator unit determines that the received signals correspond to such vibration conditions, the control unit is activated to actuate the driving means to move the closure element to a safe position.

Within this framework it is furthermore advantageous if control signals relating to specific positions of the closure element are stored in the memory unit. In this way the control unit only needs to retrieve said control signals from its memory in order to be able to move the closure element to the desired position.

The signals connected with the vibrations can relate to various vibration magnitudes. Thus it is possible for said signals to be based on the measurement of an acceleration value. In this case the sensors or the sensor consist(s) of an accelerometer. When the measured acceleration value exceeds a predetermined acceleration value (which may be stored in the memory of the control unit), the control unit is activated to actuate the driving means.

It is also possible for the signals in question to be based on the measurement of a vibration frequency or a vibration amplitude.

The measurement of the vibration value (irrespective of the fact whether this is an acceleration value, a vibration frequency or a vibration amplitude) can be carried out at any desired place on the vehicle. Preferably, however, the sensors in question will be present at the location of the closure element.

One of the main advantages of the open roof construction according to the present invention is that all standard functions of an open roof construction (such as a spoiler function) can be used, also when closure elements in the form of heavy hatch elements are used, as is for example the case with trucks. The present open roof construction is highly suitable for use in trucks, therefore.

In principle such an open roof construction is capable of performing its function continuously. It is conceivable, however, that means are used for selectively turning said function on or off.

The invention is not limited to the embodiments as described above, which can be varied in several ways without departing from the scope of the invention as defined in the claims.

## Claims

1. An open roof construction for a vehicle, comprising a roof opening that can be closed by a movable closure element, which closure element includes driving means that can be actuated by a control unit, **characterized in that** the control unit includes sensors for receiving signals relating to vibrations of the vehicle and actuating the driving means of the closure element on the basis of said signals.

2. An open roof construction according to claim 1, **characterized in that** the control unit includes a memory unit for storing vibration conditions, and a comparator unit for comparing the received signals with the stored vibration conditions and actuating the driving means on the basis of the result of the comparison.

3. An open roof construction according to claim 2, **characterized in that** control signals relating to specific positions of the closure element are stored in the memory unit.

4. An open roof construction according to any one of the preceding claims, **characterized in that** the signals relating to vibrations are based on the measurement of an acceleration value.

5. An open roof construction according to any one of the preceding claims, **characterized in that** the signals relating to vibrations are based on the measurement of a vibration frequency.

6. An open roof construction according to any one of the preceding claims, **characterized in that** the signals relating to vibrations are based on the measurement of a vibration amplitude.

7. An open roof construction according to any one of the preceding claims, **characterized in that** the sensors are disposed at the location of the closure element.

8. An open roof construction according to any one of the preceding claims, which open roof construction is used in a truck.
